# EUROPEAN PATENT APPLICATION

(11) **EP 4 231 620 A1**
(43) Date of publication of application: **23.08.2023**
(21) Application number: 21879920.3
(22) Date of filing: 05.10.2021
(51) Int. Cl.: H04M 9/00, G08B 25/04

(54) **COMPLEX FACILITY MONITORING SYSTEM, COMPLEX FACILITY MONITORING METHOD, AND COMPLEX FACILITY MONITORING PROGRAM**

(30) Priority: 13.10.2020 JP 2020172556
(71) Applicant: Panasonic Intellectual Property Management Co., Ltd., Osaka-shi, Osaka 540-6207 (JP)
(72) Inventor: HASHIMOTO, Takanori, Osaka-shi, Osaka 540-6207 (JP); IKEDA, Kouji, Osaka-shi, Osaka 540-6207 (JP); NAKAMOTO, Eiji, Osaka-shi, Osaka 540-6207 (JP)
(74) Representative: Appelt, Christian W.
(86) International application number: PCT/JP2021/036771
(87) International publication number: WO 2022/080180

(57) **Abstract**

A monitoring system according to one example of an embodiment of the present invention is for a complex facility provided with: a common entrance; a first common section located outside the common entrance; a plurality of privately owned sections located inside the common entrance; and a second common section provided between the common entrance and the privately owned sections. The monitoring system is provided with: a first acquisition unit that acquires, in association with unlocking of the common entrance, a first image including persons imaged outside the complex facility or in the first common section; a second acquisition unit that acquires a second image including persons imaged in the second common section after the unlocking of the common entrance; and an output unit that, if an unspecified person other than the persons included in the first image is included in the persons included in the second image, outputs prescribed information about the unspecified person.

## Description

### TECHNICAL FIELD

The present disclosure relates to a system for monitoring a collective facility, a method for monitoring the collective facility, and a program for monitoring the collective facility.

### BACKGROUND

A lobby intercom is installed in a common entrance of a collective facility such as a condominium. A visitor communicates with a resident by using the lobby intercom, and when the resident unlocks the common entrance, the visitor can enter the collective facility. Patent Literature 1 discloses an intercom system that prevents so-called tailgating in which an unspecified person other than a visitor enters the collective facility, by further monitoring a person passing through the common entrance when the resident unlocks the common entrance.

### CITATION LIST

### PATENT LITERATURE

Patent Literature 1: JP 2000-101731 A

### SUMMARY

### TECHNICAL PROBLEM

According to the technique disclosed in Patent Literature 1, the resident unlocking the common entrance may check on the occurrence of tailgating, and thus may take security measures. However, the tailgating unspecified person may approach a dwelling unit other than a visit destination of the visitor. Therefore, security is insufficient for the other residents, and sufficient security is not secured as a whole for the collective facility.

Therefore, it is an advantage of the present disclosure to provide a monitoring system that is to be applied to a collective facility and may secure excellent security for the collective facility.

### SOLUTION TO PROBLEM

A system for monitoring a collective facility as one aspect of the present disclosure is a system for monitoring a collective facility that includes a common entrance, a first common element on the outside of the common entrance, a plurality of exclusive elements on the inside of the common entrance, and a second common element provided between the common entrance and the plurality of exclusive elements. The system includes a first acquisition unit configured to acquire a first image including persons captured on the outside of the collective facility or in the first common element, in association with unlocking of the common entrance, a second acquisition unit configured to acquire a second image including persons captured in the second common element after the common entrance is unlocked, and an output unit configured to output, when the persons included in the second image include an unspecified person other than the persons included in the first image, predetermined information about the unspecified person.

A method for monitoring a collective facility as one aspect of the present disclosure is a method for monitoring a collective facility that includes a common entrance, a first common element on the outside of the common entrance, a plurality of exclusive elements on the inside of the common entrance, and a second common element provided between the common entrance and the plurality of exclusive elements. The method includes steps of acquiring a first image including persons captured on the outside of the collective facility or in the first common element, in association with unlocking of the common entrance, acquiring a second image including persons captured in the second common element after the common entrance is unlocked, and outputting, when the persons included in the second image include an unspecified person other than the persons included in the first image, predetermined information about the unspecified person.

A program for monitoring a collective facility as one aspect of the present disclosure is a program causing a computer to realize the above-described method.

### ADVANTAGEOUS EFFECTS OF INVENTION

According to the one aspect of the present disclosure, it is possible to provide the monitoring system that may secure excellent security for the collective facility.

### BRIEF DESCRIPTION OF DRAWINGS

FIG. 1 is a schematic diagram of a monitoring system as an example of an embodiment.
FIG. 2 is a block diagram illustrating a configuration of a controller as an example of the embodiment.
FIG. 3 is a flowchart illustrating an example of a monitoring procedure.
FIG. 4 is a schematic diagram of a monitoring system as another example of the embodiment.

### DESCRIPTION OF EMBODIMENTS

Some embodiments of the present disclosure are described in detail below with reference to the drawings. The embodiments described below are merely examples, and the present disclosure is not limited to the following embodiments. Further, it is originally assumed that a plurality of embodiments and modifications described below are selectively combined.

A device and a main body of a system according to the present disclosure each include a computer. The computer executes programs to realize functions of the device or the main body of the system according to the present disclosure. The computer includes a processor operating based on the programs, as a main hardware configuration. A type of the processor is not limited as long as the processor can realize the above-described functions by executing the programs. The processor is configured by one or a plurality of electronic circuits including an integrated circuit (IC) or a large-scale integration (LSI). The plurality of electronic circuits may be integrated into one chip, or may be provided in a plurality of chips. The plurality of chips may be integrated into one device or may be provided in a plurality of devices. The programs are stored in a non-transitory storage medium such as a computer-readable ROM, an optical disc, or a hard disk drive. The programs may be previously stored in the storage medium, or may be supplied to the storage medium through a wide-area communication network including the Internet and the like.

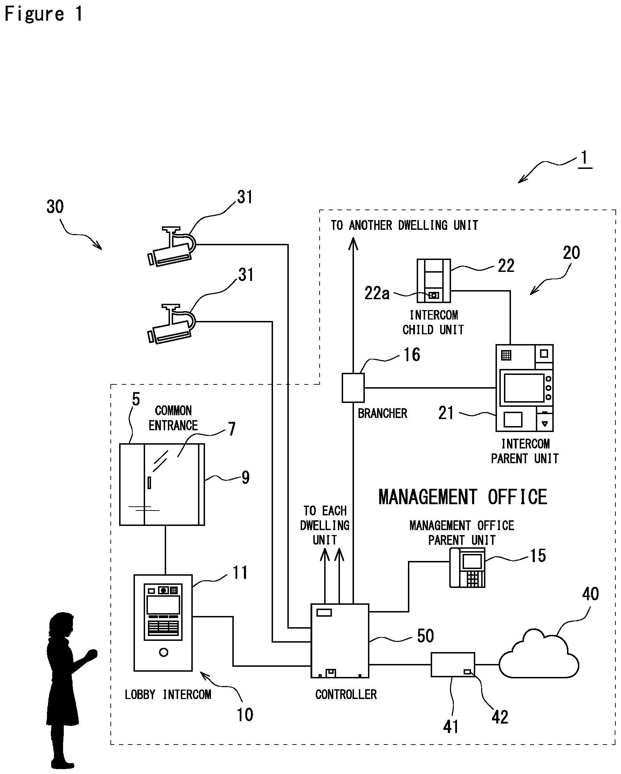

FIG. 1 is a diagram schematically illustrating a configuration of a monitoring system 1 as an example of an embodiment. As illustrated in FIG. 1, the monitoring system 1 is a system provided in a collective facility. Specific examples of the collective facility include collective housing such as a condominium, a dormitory, and company housing. However, the collective facility is not limited to the collective housing, and may be a facility configured by collecting a plurality of facilities (plurality of companies, departments, divisions, etc.) such as offices, factories, research facilities, medical facilities, and accommodation facilities.

The collective facility includes a common entrance 5, a first common element on the outside of the common entrance 5, a plurality of exclusive elements on the inside of the common entrance 5, and a second common element provided between the common entrance 5 and the plurality of exclusive elements. The common entrance 5 includes an entrance door 7, and an automatic locking device 9 automatically locking the entrance door 7 when the entrance door 7 is closed. The entrance door 7 is configured by, for example, an automatic door, and is basically normally locked.

The monitoring system 1 includes a first common element device 10 provided in the first common element, a plurality of exclusive element devices 20 provided in respective dwelling units as the exclusive elements, a cloud server 40, and a controller 50 controlling these devices. Note that a second common element device 30 provided in the second common element is not included in the monitoring system 1. Further, the common entrance 5 is communicably connected to the first common element device 10, the exclusive element devices 20, and the controller 50.

When a visitor visiting the collective facility calls a resident in any of the exclusive elements through a lobby intercom 11 and requests unlocking of the common entrance 5, and then visits a dwelling unit of a visit destination through the second common element, a security function of the monitoring system 1 is exerted. The monitoring system 1 acquires a first image including persons captured in the first common element on the outside of the common entrance 5, and a second image including persons captured in the second common element on the inside of the common entrance 5 after the common entrance 5 is unlocked. When the first image and the second image are collated with each other, and the persons included in the second image include an unspecified person other than the persons included in the first image, the monitoring system 1 outputs predetermined information about the unspecified person. This makes it possible to prevent tailgating of an unintended person when the resident invites the visitor into the collective facility. As a result, it is possible to secure excellent security for the collective facility. The unspecified person used herein is a person other than residents of the collective facility or a person registered by any of the residents. Further, when the person has been registered by any of the residents but the second image is captured at a place in the second element off a route from the common entrance 5 to the dwelling unit of the resident having registered the person, it may be determined that the person is an unspecified person.

In the following, the devices of the monitoring system 1 will be described. The second common element device 30 is not included in the monitoring system 1 but will be briefly described together with the devices of the monitoring system 1 for convenience of description.

The first common element device 10 provided in the first common element includes the lobby intercom 11 to call each dwelling unit. The lobby intercom 11 is installed on the outside of the entrance door 7. The visitor calls the dwelling unit of the visit destination by the lobby intercom 11, and requests the resident of the dwelling unit to unlock the common entrance 5. As a result, the visitor can enter the inside of the entrance door 7, and visit the dwelling unit. The resident checks the visitor through the exclusive element device 20, and operates the exclusive element device 20 to unlock the common entrance 5.

The lobby intercom 11 includes a numeric keypad, a call button, a microphone, and a loudspeaker. The visitor enters a dwelling unit number using the numeric keypad, and presses the call button to call the dwelling unit of the visit destination. When the resident responds to the call, the visitor can communicate with the resident through the microphone and the loudspeaker. The lobby intercom 11 may include a reverse master key insertion portion into which the resident or the like inserts a key to unlock the common entrance 5.

The lobby intercom 11 includes a human detection sensor, a camera, and a monitor. When a visitor is detected by the human detection sensor, the lobby intercom 11 captures an image of the visitor by the camera, and transmits the captured image to the called exclusive element device 20. The resident checks the image and unlocks the common entrance 5 for the visitor. The camera is preferably a camera that can capture a moving image and a still image. For example, the dwelling unit number entered by the numeric keypad may be displayed on the monitor, and the image captured by the camera may also be displayed on the monitor.

When the resident unlocks the common entrance 5 for the visitor, the camera of the lobby intercom 11 captures an image of the visitor (first image). In the present embodiment, the first image is an image including persons captured in the first common element, in association with the unlocking of the common entrance 5. In a case of a plurality of visitors, the camera captures all of the visitors, and the number of first images may be one or plural. A captured time may be imparted to the first image. The first image is transmitted to the cloud server 40 described below. The camera used to capture the first image is not limited to the camera of the lobby intercom 11, and may be, for example, a camera separately provided in the first common element on the outside of the common entrance 5.

The exclusive element devices 20 provided in the exclusive elements are devices installed in the respective dwelling units, and each include an intercom parent unit 21 and an intercom child unit 22. The intercom parent units 21 are installed in rooms of the respective dwelling units, and the intercom child units 22 are installed near entrances on the outside of the respective dwelling units. Each of the exclusive element devices 20 may include, for example, a sub-parent unit communicably connected to its own intercom child unit 22 through the own intercom parent unit 21.

The intercom parent units 21 are communicably connected to the lobby intercom 11 and the controller 50 through a brancher 16. Each of the intercom parent units 21 includes a microphone, a loudspeaker, a monitor, and a speech button. The resident receiving the call from the visitor through the lobby intercom 11 checks the image of the visitor on the monitor of the corresponding intercom parent unit 21. The resident can communicate with the visitor through the microphone and the loudspeaker by operating the speech button.

Each of the intercom parent units 21 further includes a registration button and an unlocking button. When the resident operates the registration button, the camera of the lobby intercom 11 or the camera separately provided in the first common element captures the first image including the visitor, and the first image is transmitted to the cloud server 40 through the controller 50. As a result, before the visitor enters the second common element on the inside of the common entrance 5, the visitor can be registered in association with the first image. In addition, when the resident operates the unlocking button, the common entrance 5 is unlocked and the entrance door 7 is opened, which enables the visitor to enter the second common element.

Further, each of the intercom parent units 21 is communicably connected to the corresponding intercom child unit 22. When the visitor calls the resident by using a call button 22a of the intercom child unit 22 described below, and the resident operates the speech button of the intercom parent unit 21, the resident can communicate with the visitor from the intercom parent unit 21 through the intercom child unit 22. In addition, the resident can check the image of the visitor.

Each of the intercom child units 22 includes the call button 22a to call the corresponding intercom parent unit 21. Each of the intercom child units 22 further includes a camera, a microphone, and a loudspeaker. When the call button 22a is operated, the corresponding intercom parent unit 21 is called, the image of the visitor is captured by the camera of the intercom child unit 22, and the image is displayed on the monitor of the intercom parent unit 21. Each of the intercom parent units 21 may have a function of recording the image of the visitor.

The second common element device 30 provided in the second common element includes monitoring cameras 31 to monitor intrusion of the unspecified person into the collective facility. The monitoring cameras 31 cooperate with the lobby intercom 11. After the common entrance 5 is unlocked, the monitoring cameras 31 each capture the second image including persons in the second common element. The number of monitoring cameras 31 that are installed may be one or plural. The monitoring cameras 31 may be installed in an elevator hall on a floor where the common entrance 5 is present. The second image including the visitor is captured near the common entrance 5, which makes it possible to detect intrusion of the unspecified person early. A captured time may be imparted to the second image. The second image is transmitted to an authentication module 42 held by a gateway 41 described below through the controller 50. The monitoring cameras 31 each preferably include a loudspeaker notifying the unspecified person of a warning.

The cloud server 40 stores images including the residents of the collective facility, and the first image transmitted from the first common element device 10 through the controller 50. The images including the residents may be registered by the residents themselves, or may be registered by a manager of the collective facility. For example, each resident may register the image including the resident themselves by using the corresponding intercom parent unit 21. Further, for example, each resident can delete the first image from the cloud server 40 by using the corresponding intercom parent unit 21. The monitoring system 1 may be set such that the first image is deleted from the cloud server 40 after a predetermined period elapses. Further, the cloud server 40 may have a function of checking, when the first image is transmitted from the lobby intercom 11, whether the first image has been captured in a state where authentication of a person is performable, and notifying the lobby intercom 11 and/or the intercom parent unit 21 that the first image should be captured again.

The gateway 41 functions as a router connecting the controller 50 and the cloud server 40. Further, the gateway 41 includes the authentication module 42. The authentication module 42 collates the acquired second image with the first image, and determines whether the persons included in the second image include an unspecified person other than the persons included in the first image. More specifically, the unspecified person is a person that has been captured in the second image but has not been captured in the first image, and is not a resident of the collective facility.

The unspecified person may be specified based on collation between faces of the persons included in the second image and faces of the persons included in the first image. More specifically, the authentication module 42 performs authentication processing on the faces of the persons included in the second image and the faces of the persons included in the first image. If necessary, the authentication module 42 further performs the authentication processing on the faces of the persons included in the second image and faces of the residents of the collective facility stored in the cloud server 40.

The unspecified person may be specified based on comparison between the number of persons included in the second image and the number of persons included in the first image. More specifically, the authentication module 42 determines whether the number of persons included in the second image is different from the number of persons included in the first image. When the number of persons included in the second image is different from the number of persons included in the first image, the authentication module 42 performs the authentication processing on the faces of the persons included in the second image and the faces of the residents of the collective facility stored in the cloud server 40, to check whether any of the residents is included in the second image.

Although details are described below, when the second image includes the unspecified person, the gateway 41 transmits information about the unspecified person having intruded into the collective facility to the controller 50, and the controller 50 outputs predetermined information about the unspecified person.

As described above, the controller 50 is communicably connected to the first common element device 10 provided on the outside of the common entrance 5, the exclusive element devices 20 of the respective dwelling units, the second common element device 30 provided between the common entrance 5 and the dwelling units, and the cloud server 40, and has a function of controlling these devices. Further, in the present embodiment, the controller 50 is communicably connected to a management office parent unit 15 in a management office. For example, the management office parent unit 15 can transmit various information to the lobby intercom 11, the intercom parent units 21, and the monitoring cameras 31 through the controller 50.

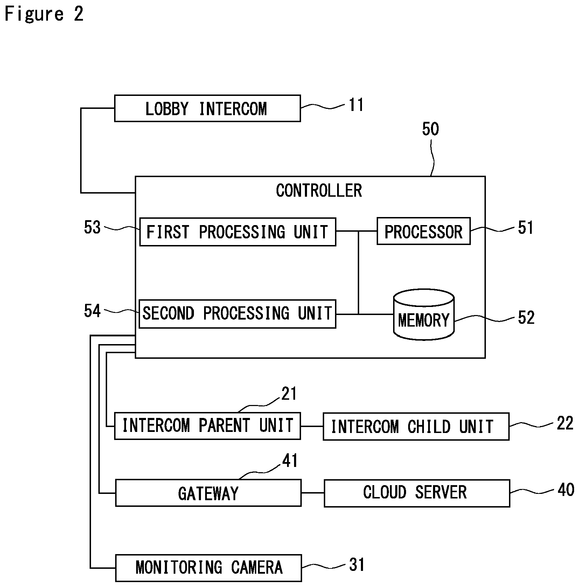

FIG. 2 is a block diagram illustrating a configuration of the controller 50. As illustrated in FIG. 2, the controller 50 includes a processor 51 performing calculation processing to control the monitoring system 1, a memory 52 storing control programs, and the like. The controller 50 is a device totally controlling the monitoring system 1, is communicably connected to the lobby intercom 11, the intercom parent units 21, the monitoring cameras 31, the cloud server 40, the management office parent unit 15, and the like, acquires various information by receiving signals from the devices, and controls the devices by outputting control signals to the devices. In addition, the controller 50 is communicably connected to the intercom child units 22 through the intercom parent units 21.

The controller 50 includes a first processing unit 53 that performs calling of the intercom parent units 21, unlocking of the automatic lock of the entrance door 7, and the like. When calling operation is performed in the lobby intercom 11, the first processing unit 53 calls a predetermined intercom parent unit 21, and outputs an unlocking signal to the automatic locking device 9 based on operation of the intercom parent unit 21. When the unlocking signal is output to the automatic locking device 9, the automatic lock of the entrance door 7 is unlocked. Further, when the call button 22a of any of the intercom child units 22 is operated, the first processing unit 53 calls the corresponding intercom parent unit 21.

The controller 50 further includes a second processing unit 54. The second processing unit 54 is configured to perform control relating to specification of the unspecified person. The second processing unit 54 functions as a first acquisition unit acquiring the first image, a second acquisition unit acquiring the second image, and an output unit outputting the predetermined information about the unspecified person when the persons included in the second image include the unspecified person other than the persons included in the first image.

The controller 50 is configured by a computer including the processor 51. The memory 52 is configured by, for example, a RAM, a ROM, and a hard disk, and is incorporated in the computer including the processor 51. The controller 50 may be configured by one computer or a plurality of computers. Further, some or all of the functions of the controller 50 may be present in, for example, a server such as the cloud server 40 on the outside of the collective facility.

The second processing unit 54 will be described in detail below. As described above, the second processing unit 54 performs the control relating to specification of the unspecified person. The processor 51 realizes the functions of the first processing unit 53 and the second processing unit 54 by reading out and executing the control programs installed in the memory 52. In other words, the control programs installed in the memory 52 include a program causing the computer to realize the control relating to specification of the unspecified person.

The second processing unit 54 acquires the image (first image) of the visitor captured by the camera of the lobby intercom 11, and transmits the image to the cloud server 40. Further, when acquiring the image (second image) including the persons captured by any of the monitoring cameras 31, the second processing unit 54 transmits the second image to the gateway 41, and transmits the first image stored in the cloud server 40 to the gateway 41. The authentication module included in the gateway 41 performs the authentication processing using the received first image and the received second image. When the authentication module 42 determines that the persons included in the second image include the unspecified person other than the persons included in the first image, the second processing unit 54 outputs predetermined information about the unspecified person. Note that the second processing unit 54 may transmit the first image to the gateway 41, and the gateway 41 may store the first image. In this case, when the gateway 41 receives the second image, the second image can be promptly collated and compared with the first image, which makes it possible to accelerate the processing.

The predetermined information may be warning information. The warning information is a warning to the specified unspecified person, and a warning message, such as, "get out of this building, right now", and a warning sound, can be issued from the loudspeaker. Such a warning may be issued from, for example, a camera having captured the image of the unspecified person. This clarifies that the warning is issued toward the unspecified person having intruded into the collective facility. Therefore, it is possible to put mental pressure on the unspecified person. In addition, a similar warning may be announced to the whole building of the collective facility. This makes it possible to notify all of the residents of intrusion of the unspecified person into the collective facility.

The predetermined information may include an image including the unspecified person. The image including the unspecified person is, for example, the second image or an image processed from the second image, and the like. The image including the unspecified person may be transmitted to and displayed on a monitor installed in the elevator hall or the like. This makes it possible to put mental pressure on the unspecified person. The image including the unspecified person may be transmitted to the management office parent unit 15, and may further transmitted from the management office to a management company, the police, and the like. Further, the image including the unspecified person may be transmitted to the intercom parent units 21 of the respective dwelling units.

The predetermined information may include information on a place where the second image has been captured. The image including the unspecified person is transmitted to, for example, the management office parent unit 15 or the intercom parent units 21 of the respective dwelling units. As a result, location of the unspecified person can be known. This makes it possible to take appropriate measures.

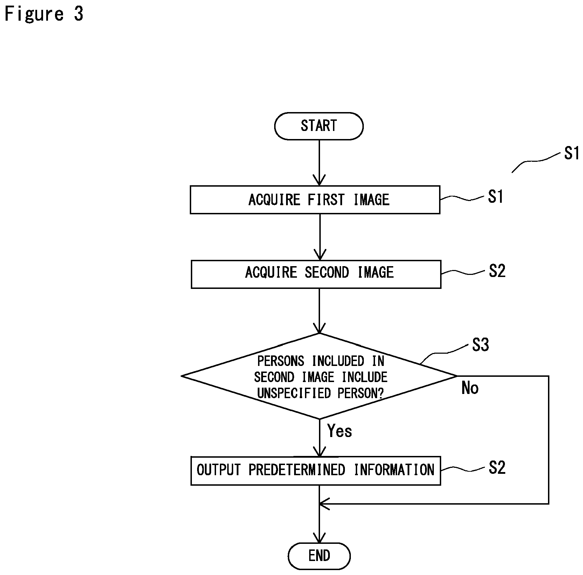

An example of a procedure of monitoring the collective facility by using the monitoring system 1 (system for monitoring collective facility) having the above-described configuration will be described below with reference to a flowchart in FIG. 3.

As illustrated in FIG. 3, in a monitoring process, first, the first image including the persons captured on the outside of the collective facility or in the first common element in association with unlocking of the common entrance 5 is acquired (S 1). In the present embodiment, the image of the visitor captured by the camera of the lobby intercom 11 before the common entrance 5 is unlocked is used as the first image.

After the first image is acquired, the common entrance 5 is unlocked, and the visitor enters the collective facility. Next, in the monitoring process, the second image including the persons captured in the second common element is acquired (S2). The image obtained by imaging, in the middle of the second common element, the visitor advancing in the second common element toward the dwelling unit of the visit destination, by any of the monitoring cameras 31 installed in the second common element, is used as the second image.

It is determined whether the persons included in the second image include the unspecified person other than the persons included in the first image (S3). In step S3, when it is determined that the persons included in the second image include the unspecified person (YES), the predetermined information is output to the unspecified person (S4). This makes it possible to take appropriate measures such as a warning to the unspecified person. In contrast, when it is determined that the persons included in the second image include no unspecified person (NO), the security for the collective facility is secured, and the predetermined information about the unspecified person is not output.

As described above, the monitoring system 1 can take appropriate measures against the unspecified person having intruded into the collective facility. This makes it possible to secure excellent security for the collective facility. Note that in the above-described embodiment, the monitoring system 1 is started when the visitor calls the resident from the lobby intercom 11. When the resident enters the collective facility by using a key or the like, the monitoring system 1 may also be started in a similar procedure. In this case, the first image is not captured. Therefore, when the second image includes the unspecified person other than the residents, the predetermined information is output. Thus, even in the case where the resident enters the collective facility, it is also possible to detect intrusion of the unspecified person.

The above-described embodiment can be appropriately changed in design without impairing the advantage of the present disclosure. The elements configuring the monitoring system 1 can be appropriately changed. For example, the device having the function of storing the first image and the images including the residents of the collective facility is not limited to the cloud server 40, and any of the devices in the monitoring system 1 such as the controller 50, the gateway 41, and the lobby intercom 11, and the devices connected to the monitoring system 1 may store the first image and the images including the residents of the collective facility. Note that the first image and the images including the residents of the collective facility may be stored in different devices, respectively. Further, the device including the authentication module is not limited to the gateway 41, and any of the devices in the monitoring system 1 such as the controller 50, the cloud server 40, and the lobby intercom 11, and the devices connected to the monitoring system 1 may include the authentication module. In any case, when the monitoring system 1 acquires the second image, the authentication module performs the authentication processing using the first image and the second image. When the device storing the first image includes the authentication module, the device can promptly collate and compare the second image with the first image at the time when the device receives the second image. This makes it possible to accelerate the processing.

As another embodiment, the controller 50 of the monitoring system 1 may not include the first processing unit 53 but include the second processing unit 54, and the monitoring system 1 may be configured to be used together with a lobby intercom system that at least includes the first common element device 10, the exclusive element devices 20, and a lobby intercom controller including the first processing unit 53. Further, the monitoring system 1 may also be configured in the lobby intercom system as a part of the lobby intercom system that at least includes the first common element device 10, the exclusive element devices 20, and the controller 50.

In the above-described embodiment, the case where the resident operates the corresponding intercom parent unit 21 to capture and register the first image including the visitor in the first common element is described as an example. However, a first image capturing method and a first image registration method are not limited to the example.

For example, the first image may be an image obtained in such a manner that the camera automatically captures the visitor when the human detection sensor of the lobby intercom 11 detects the visitor, or may also be an image obtained in such a manner that the visitor captures the visitor themselves using the camera of the lobby intercom 11.

For example, when the resident passes through the common entrance 5 with the visitor scheduled to visit the dwelling unit of the resident themselves, the resident may operate the lobby intercom 11 to capture the first image including the visitor in the first common element, and register the visitor in association with the first image.

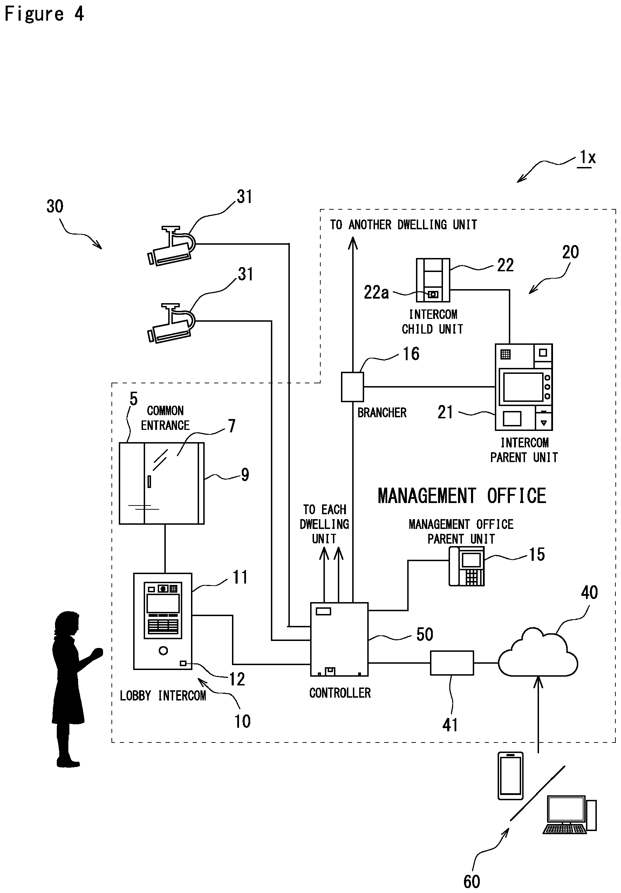

In still another embodiment (monitoring system 1x) illustrated in FIG. 4, the first image is an image including a scheduled visitor captured on the outside of the collective facility, in association with unlocking of the common entrance 5. For example, the resident may previously acquire the image of the visitor scheduled to visit the dwelling unit of the resident themselves, and transmit the image including the scheduled visitor from an external device 60 such as a smartphone/personal computer to the cloud server 40. This makes it possible to prevent the scheduled visitor from being specified as the unspecified person. Further, the resident may operate the external device 60 to store a date and time when the scheduled visitor visits, in the cloud server 40, and the monitoring system 1 may be set so as to delete the first image from the cloud server 40 after a predetermined period elapses.

Further, as illustrated in FIG. 4, the lobby intercom 11 may include an authentication module 12. Further, the first image may be stored in the lobby intercom 11. As a result, the lobby intercom 11 can unitarily manage most of data used by the monitoring system 1. This facilitates management.

In recent years, from a viewpoint of security enhancement, a destination floor of an elevator is restricted and even the resident cannot move to floors other than a floor where their own dwelling unit is present in some cases. The monitoring cameras 31 are installed in elevator halls of the respective floors, a visitor getting off the elevator on a floor other than the floor where the dwelling unit of the visit destination is present is determined as the unspecified person, and the predetermined information is output, which makes it possible to maintain a security level of the collective facility without limiting the destination floor of the elevator. As a result, the resident can freely get off the elevator on any floor. This enables operation that is well-balanced in security and convenience.

### REFERENCE SIGNS LIST

- 1, 1x: Monitoring system
- 5: Common entrance
- 7: Entrance door
- 9: Automatic locking device
- 10: First common element device
- 11: Lobby intercom
- 15: Management office parent unit
- 16: Brancher
- 20: Exclusive element device
- 21: Intercom parent unit
- 22: Intercom child unit
- 22a: Call button
- 30: Second common element device
- 31: Monitoring camera
- 40: Cloud server
- 41: Gateway
- 42: Authentication module
- 50: Controller
- 51: Processor
- 52: Memory
- 53: First processing unit
- 54: Second processing unit
- 60: External device (smartphone/personal computer)

## Claims

1. A system for monitoring a collective facility, the collective facility including a common entrance, a first common element on the outside of the common entrance, a plurality of exclusive elements on the inside of the common entrance, and a second common element provided between the common entrance and the plurality of exclusive elements, the system comprising:
a first acquisition unit configured to acquire a first image including persons captured on the outside of the collective facility or in the first common element, in association with unlocking of the common entrance;
a second acquisition unit configured to acquire a second image including persons captured in the second common element after the common entrance is unlocked; and
an output unit configured to output, when the persons included in the second image include an unspecified person other than the persons included in the first image, predetermined information about the unspecified person.

2. The system for monitoring the collective facility according to claim 1, wherein the unspecified person is specified based on collation between faces of the persons included in the second image and faces of the persons included in the first image.

3. The system for monitoring the collective facility according to claim 1 or 2, wherein the unspecified person is specified based on comparison between a number of persons included in the second image and a number of persons included in the first image.

4. The system for monitoring the collective facility according to any one of claims 1 to 3, wherein the predetermined information includes warning information.

5. The system for monitoring the collective facility according to any one of claims 1 to 4, wherein the predetermined information includes an image including the unspecified person.

6. The system for monitoring the collective facility according to any one of claims 1 to 5, wherein the predetermined information includes information on a place where the second image is captured.

7. The system for monitoring the collective facility according to any one of claims 1 to 6, wherein the first image is an image captured by a lobby intercom provided on the outside of the common entrance.

8. The system for monitoring the collective facility according to claim 7, wherein the second image is an image of persons captured by a monitoring camera that is installed in the second common element and cooperates with the lobby intercom.

9. A method for monitoring a collective facility, the collective facility including a common entrance, a first common element on the outside of the common entrance, a plurality of exclusive elements on the inside of the common entrance, and a second common element provided between the common entrance and the plurality of exclusive elements, the method comprising steps of:
acquiring a first image including persons captured on the outside of the collective facility or in the first common element, in association with unlocking of the common entrance;
acquiring a second image including persons captured in the second common element after the common entrance is unlocked; and
outputting, when the persons included in the second image include an unspecified person other than the persons included in the first image, predetermined information about the unspecified person.

10. A program for monitoring a collective facility, causing a computer to realize the method according to claim 9.
